# EUROPEAN PATENT SPECIFICATION

(11) **EP 2 200 025 B1**
(45) Date of publication and mention of the grant of the patent: **16.01.2013**
(21) Application number: 09169834.0
(22) Date of filing: 09.09.2009
(51) Int. Cl.: G10L 19/00

(54) **Bandwidth scalable codec and control method thereof**
Bandbreiten-skalierbarer Codec und Steuerverfahren dafür
Codec extensible à largeur de bande et son procédé de contrôle

(30) Priority: 11.12.2008 KR 20080126019
(43) Date of publication of application: 23.06.2010
(73) Proprietor: Electronics and Telecommunications Research Institute, Daejeon 305-350 (KR)
(72) Inventor: Lee, Mi Suk, Daejeon (KR); Bae, Hyun Joo, Daejeon (KR); Lee, Byung Sun, Daejeon (KR)
(74) Representative: Betten & Resch

(56) References cited:
- "G.729 based Embedded Variable bit-rate coder: An 8-32 kbit/s scalable wideband coder bitstream interoperable with G.729; G.729.1 (05/06)" ITU-T DRAFT STUDY PERIOD 2005-2008, INTERNATIONAL TELECOMMUNICATION UNION, GENEVA ; CH, no. G.729.1 (05/06), 29 May 2006 (2006-05-29), XP017404590
- OSHIKIRI M ET AL: "Efficient spectrum coding for super-wideband speech and its application to 7/10/15 KHz bandwidth scalable coders" ACOUSTICS, SPEECH, AND SIGNAL PROCESSING, 2004. PROCEEDINGS. (ICASSP ' 04). IEEE INTERNATIONAL CONFERENCE ON MONTREAL, QUEBEC, CANADA 17-21 MAY 2004, PISCATAWAY, NJ, USA,IEEE, PISCATAWAY, NJ, USA, vol. 1, 17 May 2004 (2004-05-17), pages 481-484, XP010717670 ISBN: 978-0-7803-8484-2

## Description

### BACKGROUND OF THE INVENTION

### 1. Field of the Invention

The present invention relates to a bandwidth scalable codec and a control method thereof, and more particularly, to a bandwidth scalable codec and a control method thereof in which, when bandwidth switching occurs, a frequency band of an input signal is controlled on the basis of a result of computing an interval of a bandwidth switching section and comparing the interval with a preset threshold value, and increase or decrease of bandwidth in the bandwidth switching section.

### 2. Description of the Related Art

In general, a voice codec compresses a voice signal, and transmits the signal or stores and plays back the signal, and is comprised of an encoder and a decoder. The encoder compresses the voice signal and the decoder restores the voice signal. The decoder includes a packet loss concealment algorithm therein to lessen sound quality deterioration caused by packet loss which may occur when the data compressed by the encoder is transmitted through a packet network. Recently, an enhanced codec having features such as a variable bit rate and band scalability has been being standardized, providing compatibility with a general standard codec.

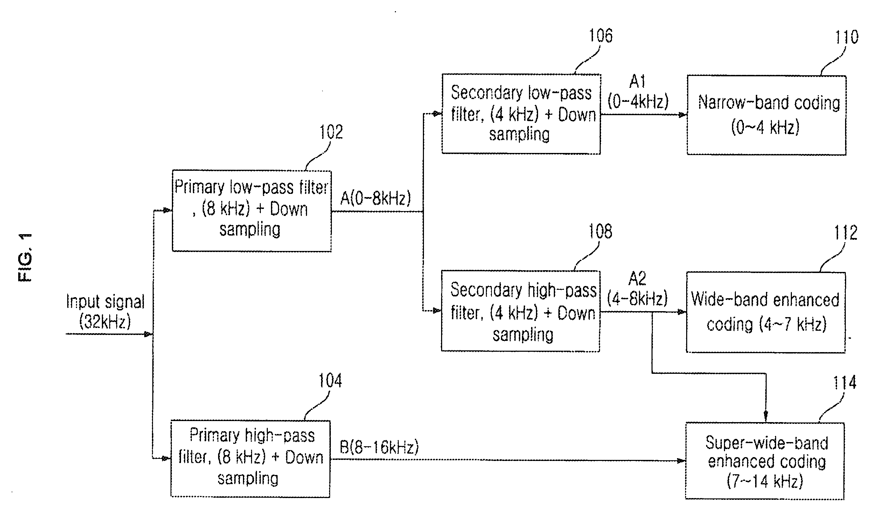

FIG. 1 is a diagram illustrating a structure of a bandwidth scalable super-wide-band codec. That is, FIG. 1 shows an example of the super-wide-band codec providing compatibility with a narrow-band codec. Normally, the bandwidth scalable codec has a structure for dividing an input signal into a few frequency band signals, and encoding and decoding the respective frequency band signals. Referring to FIG. 1, first of all, the bandwidth scalable super-wide-band codec divides an input signal into a low band signal A and a high band signal B by a primary low-pass filter 102 and a primary high-pass filter 104, and encodes the high band signal B by a super-wide-band enhanced coding module 114. Then, the bandwidth scalable codec divides a wide-band signal corresponding to the low band signal A into a low band signal A1 and a high band signal A2 by a secondary low-pass filter 106 and a secondary high-pass filter 108, and encodes the low band signal A1 by a narrow-band coding module 110 and the high band signal A2 by a wide-band enhanced coding module 112. Accordingly, when the output data of the narrow-band coding module 110 is decoded, a narrow-band signal is played back, and when the output data of the narrow-band coding module 110 and the wide-band enhanced coding module 112 are decoded, a wide-band signal is played back. When the output data of the narrow-band coding module 110, the wide-band enhanced coding module 112 and the super-wide-band enhanced coding module 114 are all decoded, a super-wide-band signal can be output.

The packet loss concealment algorithm of the bandwidth scalable codec is executed on every frequency band, like the coding structure. Therefore, when packet loss occurs, a narrow-band packet loss concealment module restores a narrow-band signal, and a wide-band enhanced packet loss concealment module restores a signal required for wide-band enhancement by using the restored narrow-band signal.

ITU-T G.729.1 is a representative bandwidth scalable codec enhanced on the basis of G.729, which is a narrow-band codec. This codec provides bit stream level compatibility with G.729 at 8 kbit/s and a narrow-band signal of high quality at 12 kbit/s. And, the codec plays back a wide-band signal from 14 kbit/s to 32 kbit/s. Particularly, the codec can vary a bit rate during a call according to a network state. When a decoder operates at 12 kbit/s and then at 14 kbit/s, the codec outputs a narrow-band signal and then a wide-band signal. On the contrary, when the decoder operates at 32 kbit/s and then at 12 kbit/s, the codec outputs a wide-band signal and then a narrow-band signal. Recently, a codec capable of providing super-wide-band quality has been developed on the basis of G.729.1. This single codec can output a narrow-band signal, a wide-band signal, and a super-wide-band signal.

When the bandwidth scalable codec is used, frequency band switching may occur during a call. For example, if a network state gets worse, the call can be conducted in a narrow-band, and if the network state gets better, the call can be conducted in a wide-band.

However, a sudden change of bandwidth during the call may affect sound quality. Such sound quality deterioration may become particularly severe when bandwidth switching is repeated at short intervals.

### SUMMARY OF THE INVENTION

An object of the present invention is to provide a bandwidth scalable codec and a control method thereof as defined in the independent claims in which, when bandwidth switching occurs, a frequency band of an input signal is controlled on the basis of a result of computing an interval of a bandwidth switching section and comparing the interval with a preset threshold value, and increase or decrease of bandwidth in the bandwidth switching section.

A control method of a bandwidth scalable codec supporting different frequency bands according to the present invention includes: checking whether bandwidth switching has occurred by comparing bandwidths of signals corresponding to respective frames of an input signal; computing an interval of a bandwidth switching section and comparing the interval with a preset threshold value, when bandwidth switching has occurred; and controlling a frequency band of the input signal on the basis of the threshold value comparison result and increase or decrease of bandwidth in the bandwidth switching section.

In addition, a bandwidth scalable codec supporting different frequency bands according to the present invention includes: a bandwidth switching checking unit for checking whether bandwidth switching has occurred by comparing bandwidths of signals corresponding to respective frames of an input signal; a switching interval computation unit for computing an interval of a bandwidth switching section, when bandwidth switching has occurred; a threshold value comparison unit for comparing the computed interval of the bandwidth switching section with a preset threshold value; a bandwidth increase/decrease checking unit for checking whether bandwidth has increased or decreased in the bandwidth switching section; and a bandwidth control unit for controlling a frequency band of the input signal on the basis of the threshold value comparison result and increase or decrease of bandwidth.

According to the present invention, when bandwidth switching occurs, the bandwidth scalable codec controls the frequency band of the input signal on the basis of the result of computing the interval of the bandwidth switching section and comparing the interval with the preset threshold value, and increase or decrease of bandwidth in the bandwidth switching section, to thereby lessen sound quality deterioration caused by a sudden bandwidth change.

### Brief Description of the Drawings

The above and other objects, features and advantages of the present invention will become more apparent from the following description of preferred embodiments given in conjunction with the accompanying drawings, in which:
FiG. 1 is a diagram illustrating a structure of a bandwidth scalable super-wide-band codec;
FIG. 2 is a diagram illustrating a process of transmitting a voice signal through a packet network;
FIG. 3 is a block diagram illustrating an inner construction of a bandwidth scalable codec according to the present invention;
FIG. 4 is a flowchart illustrating a control method of a bandwidth scalable codec according to the present invention;
FIG. 5 is a diagram illustrating a process of reconstructing a voice signal at a receiving end; and
FIG. 6 is a diagram illustrating bandwidth changes according to the present invention, when bandwidth switching has occurred.

### Detailed Description of Exemplary Embodiments

Hereinafter, exemplary embodiments of the present invention will be explained in detail with reference to the accompanying drawings.

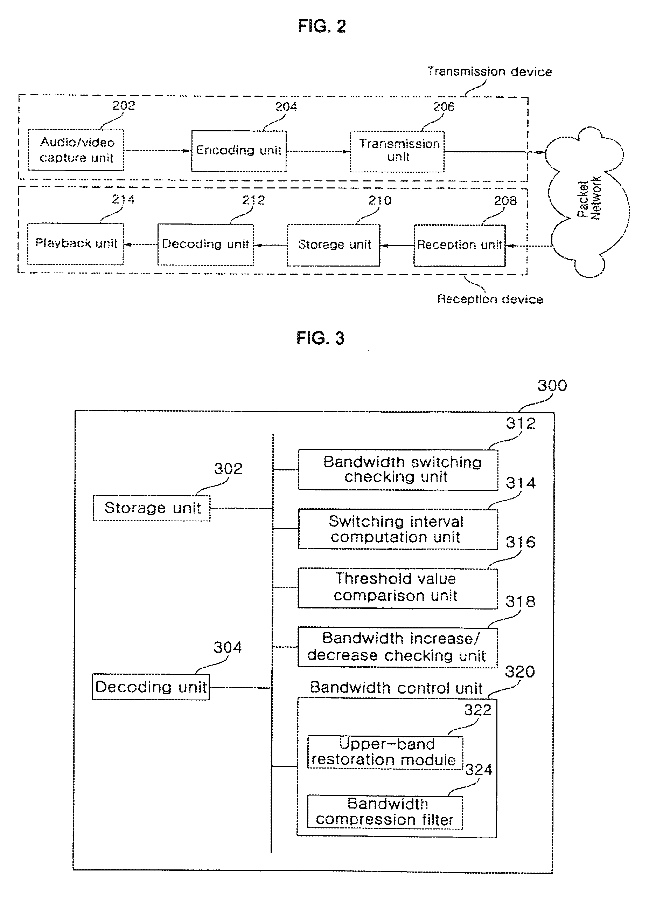

FIG. 2 is a diagram illustrating a process of transmitting a voice signal through a packet network.

Referring to FIG. 2, a transmission device uses an encoding unit 204 to encode an audio signal picked up by an audio/video capture unit 202, and uses a transmission unit 206 to transmit packets through a network via real-time transmission protocol. Meanwhile, a reception device uses a reception unit 208 to receive a packet transmitted using the real-time transmission protocol, and temporarily stores the received packet in a storage unit 210 (e.g., a jitter buffer), to thereby lessen sound quality deterioration caused by delayed reception of packets or reception of packets out of order. In addition, the reception device uses a decoding unit 212 to decode an output of the jitter buffer at regular time intervals, and uses a playback unit 214 to output a voice signal. The present invention is applicable when a bandwidth scalable encoder and decoder are used in the communication environment shown in FIG. 2.

In the present invention, a bandwidth scalable codec means a codec capable of supporting one or more frequency bands. For example, the bandwidth scalable codec may be G.729.1 or G.718, which can provide a narrow-band signal and a wide-band signal.

The bandwidth scalable codec can adjust a bit rate according to a network state, so that frequency band switching may occur. For example, while a call is conducted using a super-wide-band signal, when the network state becomes too bad to transmit data required for super-wide-band decoding, the call can be conducted using a wide-band signal or a narrow-band signal. And, when the network state gets better, the call can be conducted in the super-wide-band. If the network state is not stable, frequency band switching often occurs at short intervals, which may degrade sound quality. It is thus possible to lessen such sound quality deterioration by checking whether frequency band switching has occurred, and adjusting a frequency band change speed according to a frequency band switching interval when switching has occurred.

FIG. 3 is a block diagram illustrating an inner construction of a bandwidth scalable codec according to the present invention.

Referring to FIG. 3, the bandwidth scalable codec 300 according to the present invention includes a storage unit 302, a decoding unit 304, a bandwidth switching checking unit 312, a switching interval computation unit 314, a threshold value comparison unit 316, a bandwidth increase/decrease checking unit 318, and a bandwidth control unit 320. The bandwidth control unit 320 includes an upper-band restoration module 322 and a bandwidth compression filter 324.

The bandwidth switching checking unit 312 checks whether bandwidth switching has occurred by comparing bandwidths of signals corresponding to respective frames of an input signal input to the bandwidth scalable codec 300 and stored in the storage unit 302.

The switching interval computation unit 314 computes an interval of a bandwidth switching section, when bandwidth switching has occurred.

Here, in a case where the input signal is composed of frames, the switching interval computation unit 314 can compute the interval of the bandwidth switching section by measuring the number of frames of the switching section.

The threshold value comparison unit 316 compares the computed interval of the bandwidth switching section with a preset threshold value.

The bandwidth increase/decrease checking unit 318 checks whether bandwidth has increased or decreased in the bandwidth switching section, when bandwidth switching has occurred.

The bandwidth control unit 320 controls a frequency band of the signal input to the bandwidth scalable codec 300 according to the threshold value comparison result and increase or decrease of bandwidth.

That is, when the interval of the bandwidth switching section is smaller than the threshold value, and the bandwidth has increased in the bandwidth switching section, the bandwidth control unit 320 reduces the frequency band of the input signal of the bandwidth switching section to a frequency band before the bandwidth switching using the bandwidth compression filter 324.

Moreover, when the interval of the bandwidth switching section is smaller than the threshold value, and the bandwidth has decreased in the bandwidth switching section, the bandwidth control unit 320 controls the frequency band by reconstructing the frequency band of the input signal of the bandwidth switching section as an upper-band before the switching via a packet loss concealment algorithm using the upper-band restoration module 322.

For example, the packet loss concealment algorithm can be implemented by computing a pitch section from previous input signal samples of the current input signal, and repeatedly inserting the pitch section into the lost packet frame.

In the meantime, when the interval of the bandwidth switching section is equal to or larger than the threshold value, and the bandwidth has decreased in the bandwidth switching section, first of all, the bandwidth control unit 320 restores the frequency band of the input signal of the bandwidth switching section to an upper-band before the switching using the upper-band restoration module 322 employing the packet loss concealment algorithm. Thereafter, the bandwidth control unit 320 controls the frequency band by gradually reducing the frequency band of the signal restored to the upper-band using the bandwidth compression filter 324.

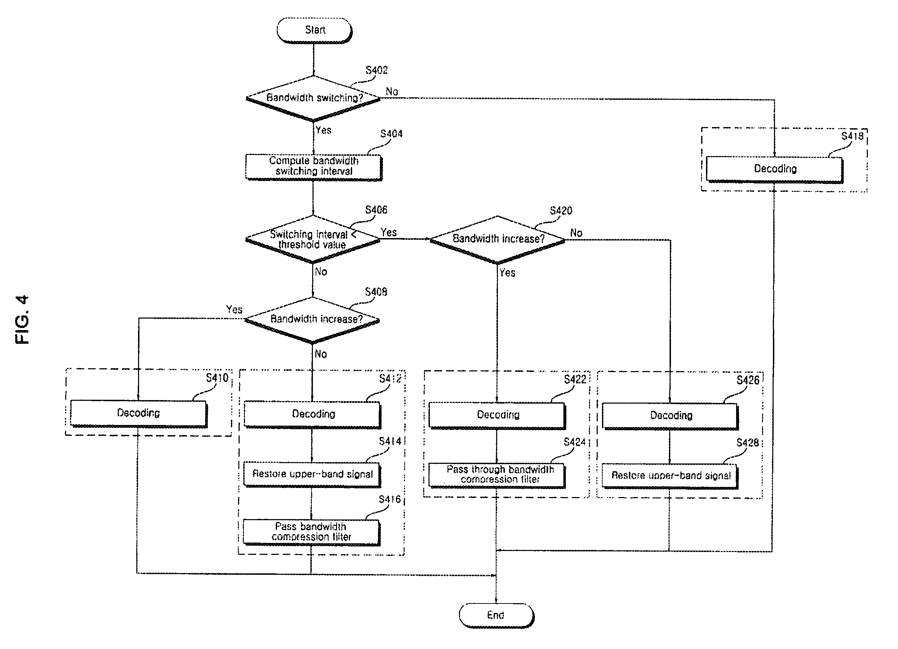

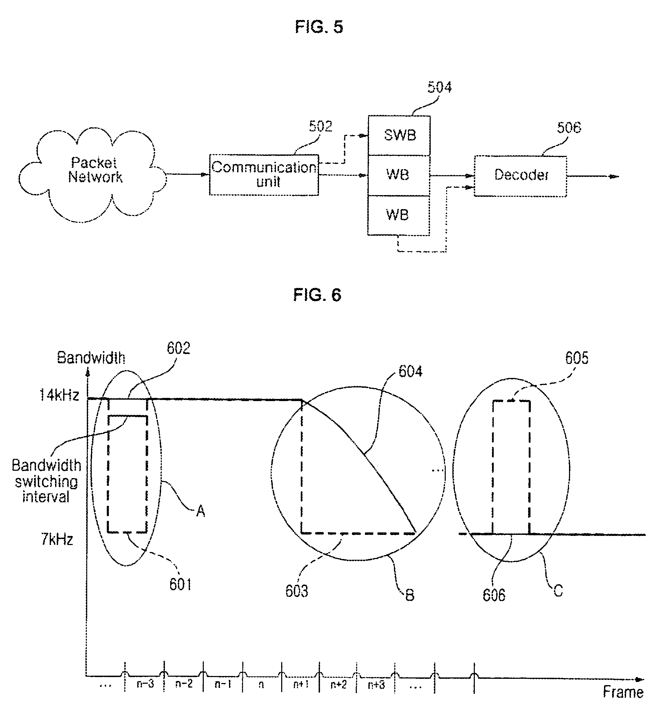

FIG. 4 is a flowchart illustrating a control method of a bandwidth scalable codec according to the present invention, FIG. 5 is a diagram illustrating a process of reconstructing a voice signal at a receiving end, and FIG. 6 is a diagram illustrating bandwidth changes according to the present invention, when bandwidth switching has occurred.

Referring to FIG. 4, first of all, the bandwidth scalable codec checks whether bandwidth switching has occurred by confirming bandwidths of frame data stored in a jitter buffer (S402).

The jitter buffer is composed of one or more frames. For example, as illustrated in FIG. 5, in a case where the jitter buffer 504 is composed of three frames, if frequency band switching occurs, the frequency bands of the data in the jitter buffer will be different.

If all the data in the jitter buffer have the same bandwidth, since frequency band switching did not occur, the bandwidth scalable codec decodes the data as is (S418).

However, if there is data with a different frequency band, the bandwidth scalable codec computes a frequency band switching interval (S404).

Then, the bandwidth scalable codec compares the switching interval with a preset threshold value (S406), and, when the switching interval is smaller than the threshold value, compares a frequency band of the data in the switching section with frequency bands of the data before and after the switching (S420). Here, the threshold value is preset to an optimal value by a listening test.

For example, in a case where a frequency band 601 of a switching section is smaller than frequency bands of data before and after frequency band switching, as in section A of FIG. 6, the bandwidth scalable codec decodes the received data (S426) and restores an upper-band signal 602 by using a packet loss concealment algorithm. For instance, when receiving wide-band data while decoding super-wide-band data, the bandwidth scalable codec decodes the wide-band signal, and restores an upper-band signal ranging from 7 to 14 kHz using the packet loss concealment algorithm. And, the bandwidth scalable codec outputs a super-wide-band signal by adding the two signals.

If a frequency band 605 of data in a switching section is larger than frequency bands of preceding and succeeding data, as in section C, the bandwidth scalable codec decodes the received data (S422) and sets the frequency band of the decoded signal equal to the frequency bands 606 of the preceding and succeeding frames using the bandwidth compression filter (S424).

Meanwhile, when the switching interval is larger than the threshold value, the bandwidth scalable codec checks whether the frequency band has increased (S408). If the frequency band has increased, the bandwidth scalable codec decodes and plays back the signal (S410).

Moreover, in a case where the switching interval is larger than the threshold value and the frequency band has decreased, as in section B of FIG. 6, the bandwidth scalable codec gradually reduces the frequency band. To this end, the bandwidth scalable codec decodes the received data as is (S412), and restores other upper-band signals through the packet loss concealment algorithm, thereby reconstructing a signal with a frequency band before the switching. And, the bandwidth scalable codec gradually reduces the frequency band by passing the signal through the bandwidth compression filter (S416). Accordingly, a frequency band 603 of a switching section becomes a frequency band 604 adjusted to be slowly reduced.

While embodiments of the present invention have been illustrated in the drawings and described above, the present invention is not limited thereto. It will be apparent to those skilled in the art that various modifications can be made to the described embodiments without departing from the scope of the present invention defined by the appended claims.

## Claims

1. A control method of a bandwidth scalable codec supporting different frequency bands, the method comprising:
checking whether bandwidth switching has occurred by comparing bandwidths of signals corresponding to respective frames of an input signal;
computing an interval of a bandwidth switching section by measuring a number of frames and comparing the interval with a preset threshold value, when bandwidth switching has occurred; and
controlling a frequency band of the input signal on the basis of the threshold value comparison result and increase or decrease of bandwidth in the bandwidth switching section.

2. The control method of claim 1, wherein, when the interval of the bandwidth switching section is smaller than the threshold value and the bandwidth has increased in the bandwidth switching section, controlling the frequency band comprises reducing the frequency band of the input signal of the bandwidth switching section to a frequency band before the bandwidth switching using a bandwidth compression filter.

3. The control method of claim 1, wherein, when the interval of the bandwidth switching section is smaller than the threshold value and the bandwidth has decreased in the bandwidth switching section, controlling the frequency band comprises controlling the frequency band by restoring the frequency band of the input signal of the bandwidth switching section to an upper-band before the switching using a packet loss concealment algorithm.

4. The control method of claim 1, wherein, when the interval of the bandwidth switching section is equal to or larger than the threshold value and the bandwidth has decreased in the bandwidth switching section, controlling the frequency band comprises controlling the frequency band by restoring the frequency band of the input signal of the bandwidth switching section to an upper-band before the switching using a packet loss concealment algorithm, and by gradually reducing the frequency band of the signal restored to the upper-band using a bandwidth compression filter.

5. A bandwidth scalable codec supporting different frequency bands, the bandwidth scalable codec comprising:
a bandwidth switching checking unit for checking whether bandwidth switching has occurred by comparing bandwidths of signals corresponding to respective frames of an input signal;
a switching interval computation unit for computing an interval of a bandwidth switching section by measuring number of frames, when bandwidth switching has occurred;
a threshold value comparison unit for comparing the computed interval of the bandwidth switching section with a preset threshold value;
a bandwidth increase/decrease checking unit for checking whether bandwidth has increased or decreased in the bandwidth switching section; and
a bandwidth control unit for controlling a frequency band of the input signal on the basis of the threshold value comparison result and increase or decrease of bandwidth.

6. The bandwidth scalable codec of claim 5, wherein, when the interval of the bandwidth switching section is smaller than the threshold value and the bandwidth has increased in the bandwidth switching section, the bandwidth control unit reduces the frequency band of the input signal of the bandwidth switching section to a frequency band before the bandwidth switching using a bandwidth compression filter.

7. The bandwidth scalable codec of claim 5. wherein, when the interval of the bandwidth switching section is smaller than the threshold value and the bandwidth has decreased in the bandwidth switching section, the bandwidth control unit controls the frequency band by restoring the frequency band of the input signal of the bandwidth switching section to an upper-band before the switching using a packet loss concealment algorithm.

8. The bandwidth scalable codec of claim 5, wherein, when the interval of the bandwidth switching section is equal to or larger than the threshold value and the bandwidth has decreased in the bandwidth switching section, the bandwidth control unit controls the frequency band by restoring the frequency band of the input signal of the bandwidth switching section to an upper-band before the switching using a packet loss concealment algorithm, and by gradually reducing the frequency band of the signal restored to the upper-band using a bandwidth compression filter.

## Patentansprüche

1. Steuerverfahren eines bandbreitenskalierbaren Codec, der verschiedene Frequenzbänder unterstützt,
wobei das Verfahren umfasst:
Prüfen, ob ein andbreitenumschalten erfolgt ist, indem Bandbreiten von Signalen verglichen werden, die jeweiligen Rahmen eines Eingangssignals entsprechen;
Berechnen eines Intervalls eines Bandbreitenumschaltabschnitts durch Messen einer Anzahl von Rahmen und Vergleichen des Intervalls mit einem im Voraus eingestellten Schwellenwert, wenn ein andbreitenumschalten erfolgt ist; und
Steuern eines Frequenzbandes des Eingangssignals auf der Grundlage des Schwellenwert-Vergleichsergebnisses und Erhöhen oder Erniedrigen von Bandbreite in dem andbreitenumschaltabschnitt.

2. Steuerverfahren nach Anspruch 1, wobei dann, wenn das Intervall des Bandbreitenumschaltabschnitts kleiner ist als der Schwellenwert und die andbreite in dem andbreitenumschaltabschnitt erhöht worden ist, das Steuern des Frequenzbandes das Reduzieren des Frequenzbandes des Eingangssignals des Bandbreitenumschaltabschnitts auf ein Frequenzband vor dem Umschalten zwischen Bandbreiten unter Verwendung eines andbreitenkompressionsfilters umfasst.

3. Steuerverfahren nach Anspruch 1, wobei dann, wenn das Intervall des andbreitenumschaltabschnitts kleiner ist als der Schwellenwert und die Bandbreite in dem andbreitenumschaltabschnitt verringert worden ist, das Steuern des Frequenzbandes das Steuern des Frequenzbandes durch Wiederherstellen des Frequenzbandes des Eingangssignals des andbreitenumschaltabschnitts auf ein oberes Band vor dem Umschalten unter Verwendung eines Paketverlust-Verbergungsalgorithmus umfasst.

4. Steuerverfahren nach Anspruch 1, wobei dann, wenn das Intervall des andbreitenumschaltabschnitts gleich oder größer als der Schwellenwert ist und die Bandbreite in dem andbreitenumschaltabschnitt verringert worden ist, das Steuern des Frequenzbandes das Steuern des Frequenzbandes durch Wiederherstellen des Frequenzbandes des Eingangssignals des andbreitenumschaltabschnitts auf ein oberes Band vor dem Umschalten unter Verwendung eines Paketverlust-Verbergungsalgorithmus und durch allmähliches Verringern des Frequenzbandes des Signals, das auf das obere Band wieder hergestellt worden ist, unter Verwendung eines andbreitenkompressionsfilters umfasst.

5. Bandbreitenskalierbarer Codec, der verschiedene Frequenzbänder unterstützt, wobei der bandbreitenskalierbare Codec umfasst:
eine andbreitenumschalt-Prüfeinheit zum Prüfen, ob ein Bandbreitenumschalten erfolgt ist, durch Vergleichen von Bandbreiten von Signalen, die jeweiligen Rahmen eines Eingangssignals entsprechen;
eine Schaltintervall-Berechnungseinheit zum Berechnen eines Intervalls eines andbreitenumschaltabschnitts durch Messen einer Anzahl von Rahmen, wenn ein andbreitenumschalten erfolgt ist;
eine Schwellenwert-Vergleichseinheit zum Vergleichen des berechneten Intervalls des andbreitenumschaltabschnitts mit einem im Voraus eingestellten Schwellenwert;
eine andbreitenerhöhungs-/andbreitenerniedrigungs-Prüfeinheit zum Prüfen, ob Bandbreite in dem Bandbreitenumschaltabschnifl erhöht oder erniedrigt worden ist; und
eine Bandbreitensteuereinheit zum Steuern eines Frequenzbandes des Eingangssignals auf der Grundlage des Schwellenwert-Vergleichsergsbnisses und der Erhöhung oder Erniedrigung von Bandbreite.

6. andbreitenskalierbarer Codec nach Anspruch 5, wobei dann, wenn das Intervall des andbreitenumschaltabschnitts kleiner als der Schwellenwert ist und die Bandbreite in dem andbreitenumschaltabschnitt erhöht worden ist, die andbreitensteuereinheit das Frequenzband des Eingangssignals des andbreitenumschaltabschnitts auf ein Frequenzband vor dem Bandbreitenumschalten unter Verwendung eines Bandbreitenkompressionsfilters umfasst.

7. andbreitenskalierbarer Codec nach Anspruch 5, wobei dann, wenn das Intervall des andbreitenumschaltabschnitts kleiner ist als der Schwellenwert und die Bandbreite in dem andbreitenumschaltabschnitt verringert worden ist, die Bandbreitensteuereinheit das Frequenzband durch Wiederherstellen des Frequenzbandes des Eingangssignals des andbreitenumschaltabschnitts auf ein oberes Band vor dem Umschalten unter Verwendung eines Paketverlust-Verbergungsalgorithmus steuert.

8. andbreitenskalierbarer Codec nach Anspruch 5, wobei dann, wenn das Intervall des andbreitenumschaltabschnitts gleich oder größer als der Schwellenwert ist, die andbreitensteuereinheit das Frequenzband durch Wiederherstellen des Frequenzbandes des Eingangssignals des andbreitenumschaltabschnitts auf ein oberes Band vor dem Umschalten unter Verwendung eines Paketverlust-Verbergungsaigorithmus und durch allmähliches Reduzieren des Frequenzbandes des auf das obere Band wiederhergestellten Signals unter Verwendung eines andbreitenkompressionsfilters steuert.

## Revendications

1. Procédé de commande d'un codec à largeur de bande échelonnable supportant des bandes de fréquences différentes, le procédé comprenant :
la vérification de si une commutation de largeur de bande s'est produite en comparant des largeurs de bande de signaux correspondant à des trames respectives d'un signal d'entrée ;
le calcul d'un intervalle d'une section de commutation de largeur de bande en mesurant un nombre de trames et en comparant l'intervalle avec une valeur de seuil préétablie, lorsqu'une commutation de largeur de bande s'est produite ; et
la commande d'une bande de fréquences du signal d'entrée sur la base du résultat de comparaison de valeur de seuil et de l'augmentation ou de la diminution de la largeur de bande dans la section de computation de largeur de bande.

2. Procédé de commande selon la revendication 1, dans lequel, lorsque l'intervalle de la section de computation de largeur de bande est inférieur à la valeur de seuil et que la largeur de bande a augmenté dans la section de commutation de largeur de bande, la commende de la bande de fréquences comprend la réduction de la bande de fréquences du signal d'entrée de la section de commutation de largeur de bande à une bande de fréquences avant la commutation de largeur de bande en utilisant un filtre de compression de largeur de bande.

3. Procédé de commande selon la revendication 1, dans lequel, lorsque l'intervalle de la section de commutation de largeur de bande est inférieur à la valeur de seuil et que la largeur de bande a diminué dans la section de commutation de largeur de bande, la commande de la bande de fréquences comprend la commandé de la bande de fréquences en rétablissant la bande de fréquences du signal d'entrée de la section de commutation de largeur de bande à une bande supérieure avant la commutation en utilisant un algorithme de masquage de perte de paquet.

4. Procédé de commande selon la revendication 1, dans lequel, lorsque l'intervalle de la section de commutation de largeur de bande est égal ou supérieur à la valeur de seuil et que la largeur de bande a diminué dans la section de commutation de largeur de bande, la commande de la bande de fréquences comprend la commande de la bande de fréquences en rétablissant la bande de fréquences du signal d'entrée de la section de commutation de largeur de bande à une bande supérieure avant la commutation en utilisant un algorithme de masquage de perte de paquet, et en réduisant progressivement la bande de fréquences du signal rétablie à la bande supérieure en utilisant un filtre de compression de largeur de bande.

5. Codec à largeur de bande échelonnable supportait des bandes de fréquences différentes, le codec à largeur de bande échelonnable comprenant :
une unité de vérification de computation de largeur de bande pour vérifier si une commutation de largeur de bande s'est produite en comparant des largeurs de bande de signaux correspondant à des trames respectives d'un signal d'entrée ;
une unité de calcul d'intervalle de computation pour calculer un intervalle d'une section de computation de largeur de bande en mesurant un nombre de trames, lorsqu'une computation de largeur de bande s'est produite ;
une unité de comparaison de valeur de seuil pour comparer l'intervalle calculé de la section de computation de largeur de bande avec une valeur de seuil préétablie ;
une unité de vérification d'augmentation/diminution de largeur de bande pour vérifier si une largeur de bande a augmenté ou diminué dans la section de commutation de largeur de bande ; et
une unité de commande de largeur de bande pour commander une bande de fréquences du signal d'entrée sur la base du résultat de comparaison de valeur de seuil et de l'augmentation ou de la diminution de la largeur de bande.

6. Codec à largeur de bande échelonnable selon la revendication 5, dans lequel, lorsque l'intervalle de la section de commutation de largeur de bande est inférieur à la valeur de seuil et que la largeur de bande a augmenté dans la section de commutation de largeur de bande, l'unité de commande de largeur de bande réduit la bande de fréquences du signal d'entrée de la section de commutation de largeur de bande à une bande de fréquences avant la commutation de largeur de bande en utilisant un filtre de compression de largeur de bande.

7. Codec à largeur de bande échelonnable selon la revendication 5, dans lequel, lorsque intervalle de la section de commutation de largeur de bande est intérieur à la valeur de seuil et que la largeur de bande a diminué dans la section de commutation de largeur de bande, l'unité de commande de largeur de bande commande la bande de fréquences en rétablissant la bande de fréquences du signal d'entrée de la section de commutation de largeur de bande à une bande supérieure avant la commutation en utilisant un algorithme de masquage de perte de paquet.

8. Codec à largeur de bande échelonnable selon la revendication 5, dans lequel, lorsque l'intervalle de la section de commutation de largeur de bande est égal ou supérieur à la valeur de seuil et que la largeur de bande a diminué dans la section de commutation de largeur de bande, l'unité de commandé de largeur de bande commande la bande de fréquences en rétablissant la bande de fréquences du signal d'entrée de la section de commutation de largeur de bande à une bande supérieure avant la commutation en utilisant un algorithme de masquage de perte de paquet, et en réduisant progressivement la bande de fréquences du signal rétablie à la bande supérieure en utilisant un filtre de compression de largeur de bande.
